# EUROPÄISCHE PATENTANMELDUNG

(11) **EP 1 055 709 A1**
(43) Veröffentlichungstag der Anmeldung: **29.11.2000**
(21) Anmeldenummer: 99810449.1
(22) Anmeldetag: 25.05.1999
(51) Int. Cl.: C09B 56/12, C25D 11/24, C08K 5/00, C09B 43/11

(54) **Anthrachinon-Azofarbstoffe sowie Farbgebung unter Verwendung von solchen Verbindungenn**

(71) Anmelder: Clariant International Ltd., 4132 Muttenz 1 (CH)
(72) Erfinder: Die Erfindernennung liegt noch nicht vor

(57) **Zusammenfassung**

Wasserlösliche Farbstoffe der Formel 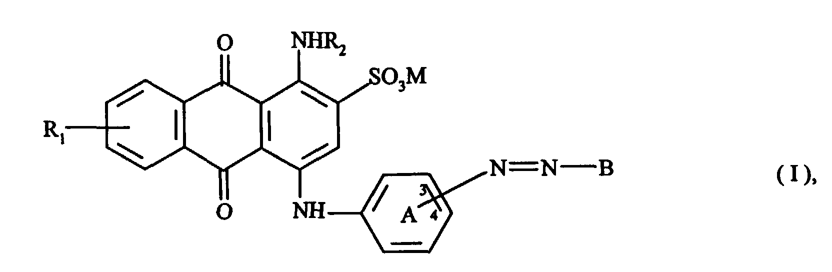 worin
- R₁: Wasserstoff, Hydroxy, C₁₋₄-Alkyl, C₁₋₄-Alkoxy, Halogen oder SO₃M,
- R₂: Wasserstoff, C₁₋₄-Alkyl oder C₃₋₆-Cycloalkyl,
- B: den Rest einer carbocyclischen, heterocyclischen oder methylenaktiven nicht-cyclischen Kupplungskomponente mit höchstens zwei gegebenenfalls kondensierten carbocyclischen Ringen,
und
- M: Wasserstoff oder ein nicht-chromophores Kation
bedeuten, der Ring A weiter unsubstituiert ist oder mit einem bis vier der folgenden Substituenten: C₁₋₄-Alkyl, C₁₋₄-Alkoxy, Halogen, -NO₂, -COOM und -SO₃M substituiert ist, und die Gruppe -N=N-B an die Stellung 3 oder 4 des Ringes A gebunden ist, mit der Maßgabe, daß das Molekül mindestens zwei Gruppen -SO₃M enthält,
eignen sich zum Färben oder Kolorieren von nicht-faserigen Substraten, insbesondere von anodisiertem Aluminium oder wasserlöslichen Kunstoffmassen.

## Beschreibung

Es wurde gefunden, daß die untenstehenden anionischen Anthrachinonazofarbstoffe sich besonders gut zur Farbgebung für nicht-fasrige Substrate eignen, wie Oxydschichten auf Metalloberflächen, Kunststoffmassen und -beschichtungen oder Rieselgut.

Die Erfindung betrifft die Verwendung der definierten Farbstoffe zur Farbgebung für nicht-fasrige Substrate, die neuen Farbstoffe und deren Herstellung und Verwendung, sowie entsprechende Farbstoffpräparate und deren Verwendung.

Ein erster Gegenstand der Erfindung ist also die Verwendung von wasserlöslichen Farbstoffen der Formel 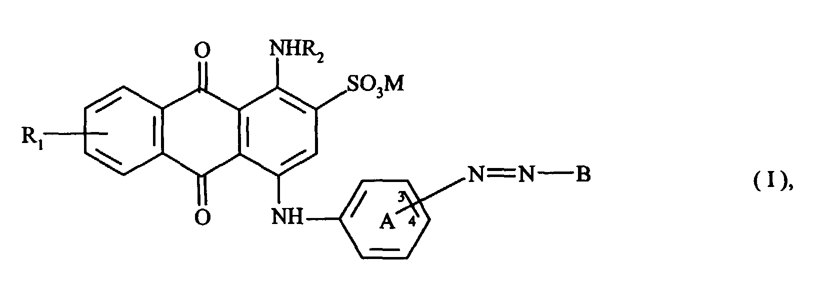 worin
- R₁: Wasserstoff, Hydroxy, C₁₋₄-Alkyl, C₁₋₄-Alkoxy, Halogen oder SO₃M,
- R₂: Wasserstoff, C₁₋₄-Alkyl oder C₃₋₆-Cycloalkyl,
- B: den Rest einer carbocyclischen, heterocyclischen oder methylenaktiven nicht-cyclischen Kupplungskomponente mit höchstens zwei, gegebenenfalls kondensierten carbocyclischen Ringen,
und
- M: Wasserstoff oder ein nicht-chromophores Kation
bedeuten, der Ring A weiter unsubstituiert ist oder mit einem bis vier der folgenden Substituenten: C₁₋₄-Alkyl, C₁₋₄-Alkoxy, Halogen, -NO₂, -COOM und -SO₃M substituiert ist, und die Gruppe -N=N-B an die Stellung 3 oder 4 des Ringes A gebunden ist, mit der Maßgabe, daß das Molekül mindestens zwei Gruppen -SO₃M enthält,
zum Färben oder Kolorieren von nicht-faserigen Substraten.

Die Anthrachinonazofarbstoffe der Formel (I) können auf an sich bekannte Weise hergestellt werden durch Diazotierungs-, Kupplungs- und Kondensationsreaktionen. Das Verfahren zur Herstellung der Verbindungen der Formel (I) ist insbesondere dadurch gekennzeichnet, daß man die Diazoverbindung aus mindestens einem Amin der Formel 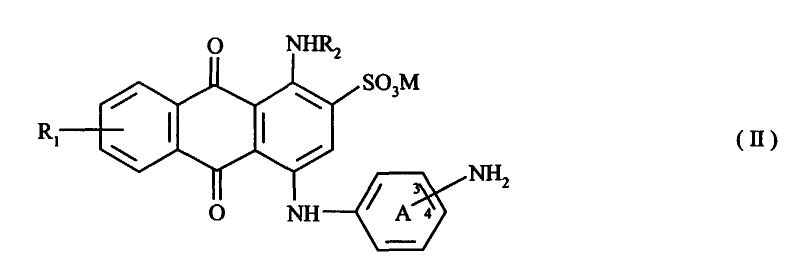 mit mindestens einer Kupplungskomponente der Formel 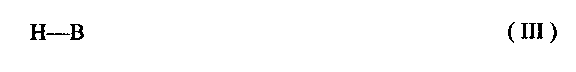 kuppelt oder eine Verbindung der Formel 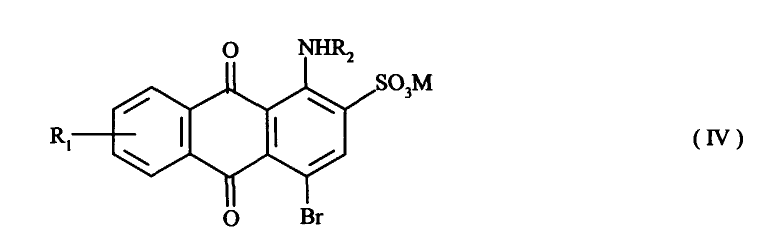 mit einer Verbindung der Formel 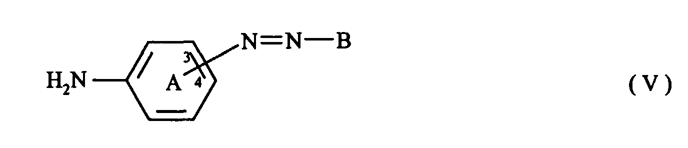 umsetzt.

Die Verbindungen der Formeln (II) bis (V) sind bekannt oder können nach an sich bekannten Methoden hergestellt werden. Die Verbindungen der Formel (V) können insbesondere dadurch hergestellt werden, daß man die Diazoverbindung aus einem Amin der Formel 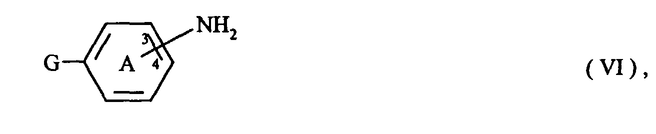 worin G eine Nitrogruppe oder eine durch Acylierung geschützte primäre Aminogruppe bedeutet,
auf eine Kupplungskomponente H-B kuppelt und, nach erfolgter Kupplung, entweder die Nitrogruppe G zu einer primären Aminogruppe reduziert oder die durch Acylierung (vorzugsweise Acetylierung) geschützte Aminogruppe G zur primären Aminogruppe hydrolysiert.

Die genannten Reaktionen (Diazotierung, Kupplung, Kondensation, Reduktion und Hydrolyse) können auf an sich bekannte Weise durchgeführt werden.

Die Diazotierung der Amine der Formel (II) oder (VI) kann auf an sich bekannte Weise erfolgen, insbesondere mit Natriumnitrit in saurem Medium (z.B. pH 1 bis 3) und bei niedriger Temperatur, z.B. im Bereich von -5 bis +15°C. Die Kupplung der Diazoniumverbindung auf eine Kupplungskomponente der Formel H-B kann auf an sich bekannte Weise durchgeführt werden, vorteilhaft bei Temperaturen im Bereich von -5 bis +30°C, vorzugsweise unterhalb 25°C, besonders bevorzugt im Bereich von 0 bis 10°C, und je nach Kupplungskomponente H-B, unter sauren bis deutlich alkalischen Bedingungen, z.B. im pH-Bereich von 3 bis 12, vorzugsweise 4 bis 11. Die Umsetzungen können in wäßrigem Medium oder auch in wäßrig/organischem Medium durchgeführt werden, wobei das organische Medium vorzugsweise ein wassermischbares inertes Lösungsmittel ist (z.B. ein Alkohol oder Dioxan).

Die Umsetzung einer Verbindung der Formel (IV) mit einer Verbindung der Formel (V) ist eine Kondensation, die unter dehydrobromierenden Bedingungen stattfindet. Vorteilhaft erfolgt sie in wäßrigem Medium in Gegenwart einer Base, z.B. eines Alkalimetallhydroxyds oder -carbonats, insbesondere in Gegenwart von Natriumhydroxyd oder -carbonat, und bei erhöhter Temperatur, z.B. im Bereich von 40 bis 100°C.

Die Reduktion einer Nitrogruppe G erfolgt zweckmäßig unter schonenden Bedingungen, z.B. mit einem Sulfit oder nach Béchamps; die Hydrolyse einer acylierten Aminogruppe G erfolgt zweckmäßig ebenfalls unter schonenden Bedingungen, z.B. bei Temperaturen im Bereich von 30 bis 80°C und im pH-Bereich von 8 bis 10.

Die Farbstoffe der Formel (I) sind im wesentlichen rein anionische Farbstoffe, sie sind insbesondere frei von kationischen oder faserreaktiven Substituenten, das heißt insbesondere, daß -B frei von solchen Substituenten ist.

Halogen steht z.B. für Fluor, Chlor oder Brom, vorzugsweise für Chlor.

Unter den C₁₋₄-Alkyl- und -Alkoxygruppen sind die niedrigermolekularen bevorzugt, vornehmlich Methyl, Äthyl, Methoxy und Äthoxy.

Wenn R₁ für Chlor oder eine Sulfogruppe steht, befindet es sich vorzugsweise in einer der Stellungen 6 und 7 des Anthrachinonringes. R₁ steht vorzugsweise für Wasserstoff oder eine Sulfogruppe;
R₂ steht vorteilhaft für Methyl, Äthyl oder besonders bevorzugt Wasserstoff.

Unter den bis zu vier möglichen weiteren Substituenten am Ring A sind vorteilhaft höchstens zwei elektronegative Substituenten (-NO₂, -COOM, -SO₃M). Vorzugsweise trägt der Ring A insgesamt höchstens zwei weitere Substituenten der obengenannten, vorzugsweise eine Sulfogruppe und gegebenenfalls einen weiteren Substituenten, der vorteilhaft eine Methyl-, Äthyl-, Methoxy-, Carboxy-, Hydroxy- oder Sulfogruppe ist. Wenn der Ring A eine Sulfogruppe trägt, befindet sich diese vorteilhaft in ortho- oder vorzugsweise meta-Stellung zur NH-Gruppe; weitere Substituenten können sich in einer bzw. mehreren der verfügbaren Stellungen am Ring A befinden.

Der Rest B ist der Rest einer Kupplungskomponente H-B wie oben definiert. Vorzugsweise ist B der Rest einer Kupplungskomponente HB₁, HB₂, HB₃ oder HB₄, worin
- HB₁: eine methylenaktive, nicht-cyclische Kupplunskomponente ist, in welcher gegebenenfalls vorhandene carbocyclische Ringe unsubstituiert sind oder mit einem oder mehreren der Substituenten C₁₋₄-Alkyl, C₁₋₄-Alkoxy, Halogen und -SO₃M substituiert sind;
- HB₂: eine methylenaktive, carbocyclische nicht-aromatische Kupplunskomponente ist;
- HB₃: eine heterocyclische Kupplunskomponente ist, in welcher ein gegebenenfalls vorhandener carbocyclischer Ring unsubstituiert ist oder mit einem oder mehreren der Substituenten C₁₋₄-Alkyl, C₁₋₄-Alkoxy, Halogen und -SO₃M substituiert ist;
und
- HB₄: eine Kupplungskomponente der Formel 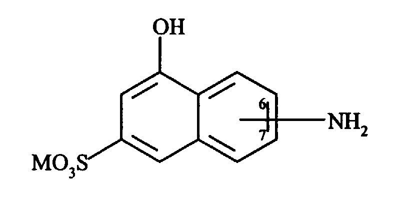 ist, worin die Aminogruppe an die Stellung 6 oder 7 der Naphthalinrestes gebunden ist.

Bevorzugte Kupplungskomponenten HB₁ sind insbesondere solche, die zwei Carbonylgruppen oder zwei Nitrilgruppen oder eine Carbonylgruppe und eine Nitrilgruppe an ein Methylen CH₂ gebunden enthalten, insbesondere solche, die in einer ihrer tautomeren Formen den Formeln 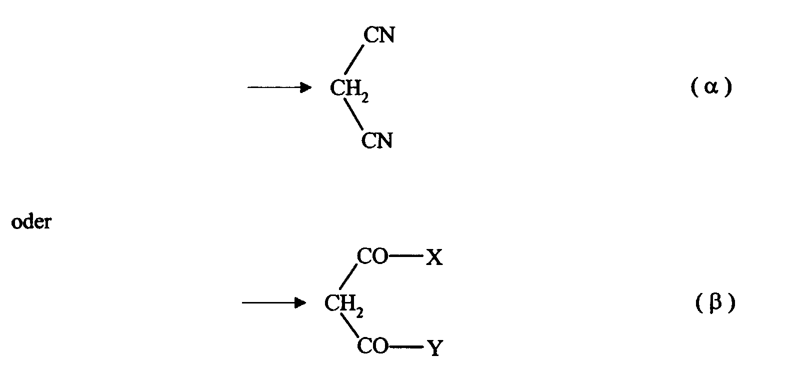 entsprechen, worin
- X: C₁₋₄-Alkyl, -OR₃, -NR₄R₅ , gegebenenfalls mit Halogen, C₁₋₄-Alkoxy, -SO₃M oder C₁₋₄-Alkyl substituiertes Phenyl, gegebenenfalls im Kern durch Halogen, C₁₋₄-Alkoxy oder -SO₃M substituiertes Phenyl-C₁₋₄-alkyl oder Sulfomethyl,
- Y: -OR₃ , C₁₋₄-Alkyl, gegebenenfalls mit Halogen, C₁₋₄-Alkoxy, C₁₋₄-Alkyl oder -SO₃M substituiertes Phenyl, gegebenenfalls im Kern mit Halogen, C₁₋₄-Alkoxy oder -SO₃M substituiertes Phenyl-C₁₋₄-alkyl oder -NR₄R₅,
- R₃: C₁₋₈-Alkyl, Phenyl oder Phenyl-(C₁₋₄-alkyl), deren Phenylrest unsubstituiert oder mit 1-3 der Substituenten Halogen, C₁₋₄-Alkyl, C₁₋₄-Alkoxy, -COOM und -SO₃M substituiert ist,
- R₄: Wasserstoff oder C₁₋₄-Alkyl
und
- R₅: Wasserstoff, C₁₋₁₀-Alkyl, C₅₋₆-Cycloalkyl, Phenyl oder Phenyl-(C₁₋₄-alkyl), deren Phenylrest weiter unsubstituiert oder durch 1-3 Substituenten aus der Reihe Halogen, Hydroxy, C₁₋₄-Alkyl, C₁₋₄-Alkoxy, -COOM und -SO₃M weitersubstituiert ist, oder einen 1- oder 2-Naphthylrest, der 1-3 Gruppen -SO₃M trägt,
bedeuten.

Bevorzugte Kupplungskomponenten HB₂ sind insbesondere solche, die zwei metaständige Oxogruppen in einem Ring enthalten, insbesondere solche, die in einer ihrer tautomeren Formen den Formeln 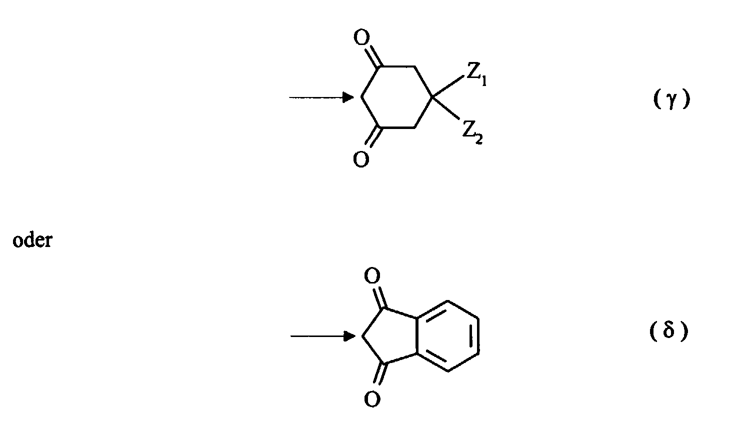 entsprechen, worin
Z₁ und Z₂ unabhängig voneinander Wasserstoff oder C₁₋₄-Alkyl, bedeuten.

Bevorzugte Kupplungskomponenten HB₃ sind insbesondere fünf- oder sechsgliedrige Heterocyclen, die mindestens ein Stickstoffatom, vorzugsweise ein oder zwei Stickstoffatome als Heteroatome enthalten und in benachbarter Stellung zu einem Stickstoff und zur Kupplungsstellung mindestens einen aktivierenden Substituenten fragen, z.B. Hydroxy bzw. Oxo oder Amino, insbesondere solche, die in einer ihrer tautomeren Formen jeweils den Formeln 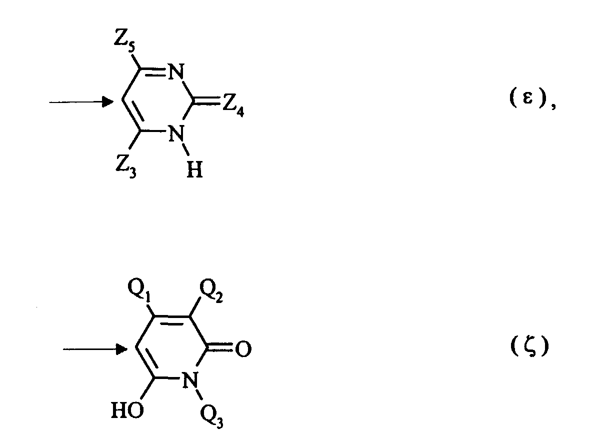 oder 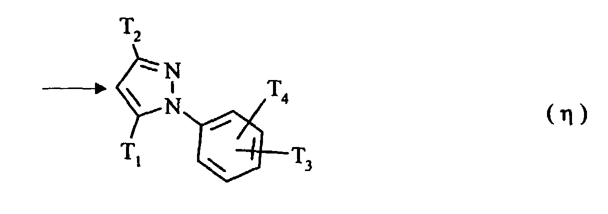 entsprechen, worin
- Z₃: -OH, -NH₂, Methyl oder Äthyl,
- Z₄: =O, =S, =NH oder =N-CN,
- Z₅: -OH oder -NH₂,
- Q₁: C₁₋₄-Alkyl, -CH₂-SO₃M, -COOM oder Phenyl, das gegebenenfalls eine -SO₃M-Gruppe trägt,
- Q₂: Wasserstoff, -CH₂-SO₃M, Cyano, -CONH₂, -SO₃M, gegebenenfalls mit Hydroxy, Halogen, Cyano, C₁₋₄-Alkoxy, -SO₃M oder -OSO₃M monosubstituiertes C₁₋₄-Alkyl,
- Q₃: Wasserstoff, C₁₋₆-Alkyl, substituiertes C₁₋₆-Alkyl, Cyclohexyl, Phenyl oder Phenyl-(C₁₋₄-alkyl) stehen,
- T₁: -OH oder -NH₂,
- T₂: C₁₋₂-Alkyl, Phenyl, Sulfomethyl oder -COOM,
- T₃: Wasserstoff, Chlor, C₁₋₄-Alkyl, C₁₋₄-Alkoxy oder -SO₃M
und
- T₄: Wasserstoff, C₁₋₄-Alkyl, C₁₋₄-Alkoxy oder -SO₃M
bedeuten,
und worin der Pfeil die Kupplungsstellung angibt.

Unter den C₁₋₄-Alkyl- und -Alkoxygruppen sind die niedrigermolekularen bevorzugt, vornehmlich Methyl, Äthyl, Methoxy und Äthoxy.

Die C₃₋₁₀-Alkylgruppen können linear oder auch verzweigt sein.

Die C₃₋₄-Alkoxygruppen können linear oder auch verzweigt sein.

M kann für Wasserstoff oder ein nicht-chromophores Kation stehen. Wasserstoff als Ion liegt als Hydroniumion vor. Als nicht-chromophore Kationen kommen beispielsweise Alkalimetallkationen, Ammoniumkationen und Erdalkalimetallkationen in Betracht. Als Erdalkalimetallkationen seinen beispielsweise Calcium und Magnesium genannt. Als Ammoniumkationen können unsubstituiertes Ammonium oder auch Ammoniumionen niedrigmolekularer Amine genannt werden, z.B. Mono-, Di- oder Tri-C₁₋₂-alkyl- und/oder -β-hydroxy-C₂₋₃-alkyl-ammonium, beispielsweise Mono-, Di- oder Triisopropanolammonium, Mono-, Di- oder Triäthanolammonium, N-Methyl-N-äthanol-ammonium. Als Alkalimetallkationen kommen übliche solche Kationen in Betracht, z.B. Lithium-, Natrium- und/oder Kaliumionen. Unter den genannten Kationen sind die Alkalimetallkationen und Ammoniumkationen bevorzugt. Nach einer Ausführung der Erfindung steht ein Teil der Symbole M für Wasserstoff und der restliche Teil davon für Alkalimetall- und/oder Ammoniumkationen.

Die Verbindungen der Formel (I) enthalten, außer der am Anthrachinonkern 2-ständigen Sulfogruppe, noch mindestens eine Sulfogruppe, vornehmlich noch eine bis vier Sulfogruppen. Vorteilhaft befinden sich eine oder zwei Sulfogruppen am Ring A, und die allfälligen restlichen in B und/oder eine davon am Anthrachinonkern als R₁ . R₂ steht vorzugsweise für Wasserstoff. R₁ steht vorzugsweise für eine Sulfogruppe oder für Wasserstoff.

In B können ein oder zwei aromatische carbocyclische Ringe enthalten sein, d.h. ein oder zwei benzolische Ringe, die gegebenenfalls kondensiert sind. Vorzugsweise ist in B höchstens ein benzolischer Ring enthalten.

Unter den Kupplungskomponenten H-B, besonders unter den Kupplungskomponenten HB₁, HB₂, HB₃ und HB₄ , sind die heterocyclischen bevorzugt, bzw. HB₃ . Unter den heterocyclischen Kupplungskomponenten, besonders unter den Kupplungskomponenten HB₃ , sind die sechsgliedrigen, besonders diejenigen der Formeln (ε) und vor allem (ζ) bevorzugt.

Die Farbstoffe der Formel (I) sind im allgemeinen grüne bis schwarze oder graue Farbstoffe und deren Lösungen weisen ausgeprägte Lichtabsorptionsmaxima im Bereich der orangefarbenen und violetten bis ultravioletten Wellenlängen, entsprechend dem blauen bzw. gelben Farbbereich der sichtbaren Farbe.

Ein weiterer Gegenstand der Erfindung ist durch diejenigen Farbstoffe der Formel (I) dargestellt, in welchen B den Rest einer Kupplungskomponente HB₁, HB₂, HB₃ oder HB₄ bedeutet, besonders der Formeln (α), (β), (γ), (δ), (ε), (ζ) oder (η).

Die Verbindungen der Formel (I) werden zum Färben von nicht-fasrigen Substraten verwendet. Als nicht-fasrige Substrate ist hier z.B. jedes Substrat gemeint, das nicht faserhaltig ist, wie insbesondere künstlich, insbesondere anodisch, erzeugte Oxydschichten auf Aluminium oder Aluminiumlegierungen, Rieselgut, oder auch polymerhaltige Massen oder Beschichtungen. Für das Färben von Oxydschichten auf Aluminium oder Aluminiumlegierungen sind besonders diejenigen Farbstoffe der Formel (I) bevorzugt, die zwei bis vier Sulfogruppen enthalten, vorzugsweise zwei bis drei Sulfogruppen, wovon sich mindestens eine bevorzugt am Ring A befindet. Für das Färben von polymerhaltigen Beschichtungen oder Massen und Rieselgut sind besonders diejenigen Farbstoffe der Formel (I) bevorzugt, die drei oder mehr Sulfogruppen, insbesondere vier bis fünf Sulfogruppen enthalten.

Als Aluminiumlegierungen kommen vornehmlich solche in Betracht, in welchen der Aluminiumanteil überwiegt, vor allem Legierungen mit Magnesium, Silicium, Zink und/oder Kupfer, z.B. Al/Mg, Al/Si, Al/Mg/Si, Al/Zn/Mg, Al/Cu/Mg und Al/Zn/Mg/Cu, vorzugsweise solche, in welchen der Aluminiumgehalt mindestens 90 Gewichtsprozent ausmacht; der Magnesiumgehalt beträgt vorzugsweise ≤ 6 Gewichtsprozent; der Siliciumgehalt beträgt vorzugsweise ≤ 6 Gewichtsprozent; der Zinkgehalt beträgt vorzugsweise ≤ 10 Gewichtsprozent; der Kupfergehalt beträgt vorteilhaft ≤ 2 Gewichtsprozent, vorzugsweise ≤ 0,2 Gewichtsprozent.

Die auf dem metallischen Aluminium oder auf den Aluminiumlegierungen gebildeten Oxydschichten können durch chemische Oxydation oder vorzugsweise auf galvanischem Wege durch anodische Oxydation erzeugt worden sein. Die anodische Oxydation des Aluminiums bzw. der Aluminiumlegierung zur Passivierung und Bildung einer porösen Schicht, kann nach bekannten Methoden erfolgen, unter Verwendung von Gleichstrom und/oder Wechselstrom, und unter Verwendung jeweils geeigneter Elektrolytbäder, z.B. unter Zusatz von Schwefelsäure, Oxalsäure, Chromsäure, Zitronensäure oder Kombinationen von Oxalsäure und Chromsäure oder Schwefelsäure und Oxalsäure. Solche Anodisierverfahren sind in der Technik bekannt, z.B. das GS-Verfahren (Gleichstrom; Schwefelsäure), das GSX-Verfahren (Gleichstrom; Schwefelsäure mit Zusatz von Oxalsäure), das GX-Verfahren (Gleichstrom; Oxalsäure), das GX-Verfahren unter Zusatz von Chromsäure, das WX-Verfahren (Wechselstrom; Oxalsäure), das WX-GX-Verfahren (Oxalsäure; erst Wechselstrom dann Gleichstrom), das WS-Verfahren (Wechselstrom; Schwefelsäure) und das Chromsäureverfahren (Gleichstrom; Chromsäure). Die Stromspannungen liegen z.B. im Bereich von 5 bis 80 Volt, vorzugsweise 8 bis 50 Volt; die Temperaturen liegen z.B. im Bereich von 5 bis 50°C; die Stromdichte an der Anode liegt z.B. im Bereich von 0,3 bis 5 A/dm², vorzugsweise 0,5 bis 4 A/dm², wobei im allgemeinen Stromdichten ≤ 2 A/dm² bereits geeignet sind, um eine poröse Oxydschicht zu erzeugen; bei höheren Spannungen und Stromdichten, z.B. im Bereich von 100 bis 150 Volt und ≥ 2 A/dm², besonders 2 bis 3 A/dm², und bei Temperaturen bis 80°C können besonders harte und feinporige Oxydschichten erzeugt werden, z.B. nach dem "Ematal" Verfahren mit Oxalsäure in Gegenwart von Titanium- und Zirkoniumsalzen. Bei der Herstellung von Oxydschichten, die anschließend elektrolytisch oder direkt mit einem Farbstoff der Formel (I) adsorptiv eingefärbt werden, liegt nach einer bevorzugten und in der Praxis an sich üblichen Verfahrensweise die Stromspannung im Bereich von 12 bis 20 Volt; die Stromdichte beträgt dabei vorzugsweise 1 bis 2 A/dm². Diese Anodisierverfahren sind in der Technik allgemein bekannt und in der Fachliteratur auch ausführlich beschrieben, z.B. in Ullmann's "Enzyklopädie der Technischen Chemie", 4. Auflage, Band 12, Seiten 196 bis 198, oder in den Sandoz-Broschüren "Sanodal®" (Sandoz AG, Basel, Schweiz, Publikations-No. 9083.00.89) oder "Ratgeber für das Adsorptive Färben von Anodisiertem Aluminium" (Sandoz, Publikations-No. 9122.00.80). Die Schichtdicke der porösen Oxydschicht liegt vorteilhaft im Bereich von 2 bis 35 µm, vorzugsweise 2 bis 25 µm. Im Falle der Farbanodisation beträgt die Dicke der Oxydschicht vorteilhaft Werte im Bereich von 5 bis 60 µm, vorzugsweise 10 bis 40 µm. Die Farbstoffe der Formel (I) sind auch für dünne Oxydschichten, z.B. solche ≤ 10 µm geeignet, sowie für solche, die anodisch gefärbt worden sind. Wenn das anodisierte Aluminium oder die anodisierte Aluminiumlegierung vor dem Färben für eine kurze Zeit (z.B. 1 Woche oder weniger) gelagert worden ist, ist es von Vorteil, das Substrat vor dem Färben zu benetzen und/oder zu aktivieren, z.B. durch eine Behandlung mit einer nicht-reduzierenden, wäßrigen Mineralsäure, z.B. mit Schwefelsäure oder Salpetersäure. Gewünschtenfalls kann die Oxydschicht - analog dem bekannten 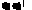 Sandalor®" Verfahren zuerst elektrolytisch vorgefärbt werden, z.B. in einem Bronzefarbton, und anschließend mit einem Farbstoff der Formel (I) überfärbt werden; auf diese Weise sind besonders gedeckte Farbtöne erhältlich, die z.B. in der Außenarchitektur eine besonders geeignete Verwendung finden. Auch ist es möglich durch Farbanodisation (nach dem als Integralfärbung bekannten Verfahren) vorgefärbte Oxydschichten mit einem Farbstoff der Formel (I) zu überfärben; auch auf diese Weise sind gedeckte Farbtöne erhältlich, die z.B. besonders für die Außenarchitektur geeignet sind.

Auf dem Gebiet der Aluminiumveredlung nehmen farbige, anodisch erzeugte Oxydschichten dank ihrer ausgezeichneten Schutzwirkung gegen mechanische und korrosive Einflüsse einen bevorzugten Platz ein.

Zur Färbung der Oxydschicht mit den Farbstoffen der Formel (I) können an sich übliche Färbemethoden verwendet werden, insbesondere Adsorptionsmethoden, wobei die Farbstofflösung z.B. auf die Oxydfläche aufgetragen werden kann, beispielsweise durch Aufsprühen oder durch Auftrag mit einer Walze (je nach Form des Substrates), oder vorzugsweise durch Eintauchen des zu färbenden Gegenstandes in ein Färbebad. Nach einer Ausführungsform des erfindungsgemäßen Färbeverfahrens können die anodisierten Metallgegenstände nach der anodischen Behandlung und dem Spülen im selben Gefäß, in welchem die Anodisierung stattgefunden hat, mit dem Färbebad behandelt werden, oder, nach einer weiteren Ausführungsform, können die zu färbenden Gegenstände nach der anodischen Behandlung und dem Spülen aus dem Gefäß herausgenommen werden und entweder direkt oder nach dem Trocknen und einer eventuellen Zwischenlagerung, in einer zweiten Anlage gefärbt werden, wobei wenn die Gegenstände zwischengelagert wurden, empfohlen wird, vor dem Färben eine Aktivierung (z.B. durch eine kurze Behandlung mit Schwefelsäure oder Salpetersäure) durchzuführen. Hierzu wird bemerkt, daß eine Zwischenlagerung - wenn sie überhaupt erfolgt - vorzugsweise für eine beschränkte, kurze Zeit erfolgt, z.B. weniger als 1 Woche, besonders ≤ 2 Tage. Nach allgemein üblichen bevorzugten Verfahren wird unmittelbar nach Anodisation und anschließendem Spülen gefärbt.

Das Färben erfolgt zweckmäßig bei Temperaturen unterhalb des Siedepunktes der Flotte, vorteilhaft bei Temperaturen im Bereich von 15 bis 80°C, vorzugsweise im Bereich von 20 bis 75°C, besonders bevorzugt 20 bis 60°C. Der pH der Färbeflotte liegt beispielsweise im deutlich sauren bis schwach basischen Bereich, beispielsweise im pH-Bereich von 3 bis 8, wobei schwach saure bis nahezu neutrale Bedingungen bevorzugt sind, insbesondere im pH-Bereich von 4 bis 6. Die Farbstoffkonzentration und die Färbedauer können je nach Substrat und gewünschtem färberischen Effekt sehr stark variieren. Es eignen sich beispielsweise Farbstoffkonzentrationen im Bereich von 0,01 bis 20 g/l, vorteilhaft 0,1 bis 10 g/l, insbesondere 0,2 bis 2 g/l. Die Färbedauer kann beispielsweise im Bereich von 20 Sekunden bis 1 Stunde, vorteilhaft 5 bis 40 Minuten liegen, wobei bei Farbstoffkonzentrationen, pH-Werten und Temperaturen in den bevorzugten Bereichen, auf Oxydschichten einer Stärke im Bereich von 5 bis 25 µm, bei einer Färbedauer von 5 bis 30 Minuten bereits sehr schöne, intensive Färbungen erhältlich sind. Da die erfindungsgemäß einzusetzenden Farbstoffe sehr gut wasserlöslich sind, können damit auch beliebig konzentrierte Stammlösungen oder Verstärkerflotten hergestellt werden, um die Farbstoffkonzentration im Färbebad beliebig, je nach Bedarf, einzustellen bzw. zu korrigieren.

Vor dem Verdichten wird das gefärbte Substrat vorteilhaft mit Wasser gespült. Zum Verdichten können beliebige, an sich übliche, bekannte Methoden verwendet werden, gegebenenfalls unter Zuhilfenahme geeigneter Zusätze. Die Verdichtung kann z.B. ein- oder zweistufig durchgeführt werden, wobei, wenn zweistufig verfahren wird, die erste Stufe vorteilhaft aus einer Heißwasserbehandlung besteht (beispielsweise im Temperaturbereich von 70 bis 90°C). Für die zweite Stufe (Nachverdichten bzw. Hauptverdichten) oder für das einstufige Verfahren kann beispielsweise mit entionisiertem Wasser verkocht werden (beispielsweise bei Temperaturen ≥ 95°C, pH-Werten im Bereich von 5,5 bis 6, und einer Behandlungsdauer von 30 bis 60 Minuten), oder es kann eine Dampfbehandlung, z.B. bei 4 bis 6 bar Überdruck erfolgen. Nach einer weiteren Verfahrensweise kann, z.B. bei pH-Werten im Bereich von 4,5 bis 8, unter Zuhilfenahme von Metallsalzen oder -oxyden (z.B. Nickelacetat oder Kobaltacetat) oder noch mit Chromaten, ein- oder zweistufig verdichtet werden. Durch ein solches Verdichten mit Metallverbindungen (z.B. mit Nickelacetat) kann ein Ausbluten des Farbstoffes besonders gut unterdrückt werden. Nach einer weiteren Verfahrensweise wird unter Zuhilfenahme organischer Verdichtungsmittel, z.B. organischer Phosphonate und Diphosphonate oder noch wasserlöslicher (cyclo)aliphatischer Polycarbonsäuren oder aromatischer ortho-Hydroxycarbonsäuren (z.B. wie in der DE-A-3327191 beschrieben) z.B. bei pH-Werten im Bereich von 4,5 bis 8, verfahren. Die Verdichtungsmittel können in sehr niedrigen Konzentrationen eingesetzt werden, beispielsweise in Konzentrationen von 0,001 bis 2 g/l, vorzugsweise 0,002 bis 0,1 g/l. Die Verdichtungstemperatur kann je nach verwendetem Hilfsmittel und gewähltem Verfahren variieren, beispielsweise im Bereich von 20 bis 100°C, für Heißverdichtungen z.B. im Bereich von 60 bis 100°C, vorteilhaft 80 bis 100°C, für Kaltverdichtungen z.B. bei Temperaturen im Bereich von 20 bis 30°C, wobei Nickelsalze oder Kobaltsalze in Kombination mit Alkalimetallfluoriden, z.B. NaF, besonders auch für eine Kaltverdichtung verwendet werden können, beispielsweise bei 20 bis 30°C. Gewünschtenfalls können die gefärbten und verdichteten Aluminiumoxydschichten bzw. Aluminiumlegierungoxydschichten nachträglich beschichtet werden, z.B. mit Wachsen, Harzen, Ölen, Paraffinen oder Kunststoffen, vorausgesetzt, daß diese Beschichtung durchsichtig ist.

Zur Einstellung der pH-Werte in den Färbebädern und Verdichtungslösungen können an sich übliche, bekannte Zusätze verwendet werden, z.B. Schwefelsäure, Essigsäure, Ammoniak, Natriumhydroxyd oder -carbonat, und/oder Natriumacetat. Gegebenenfalls, bzw. erforderlichenfalls, können belagverhindernde ("antismut" oder auch "Anti-Schmant") Zusätze verwendet werden und/oder Tenside (z.B. Netzmittel), insbesondere anionische Tenside wie C₉₋₁₄-Alkansulfonate, Mono- oder Dialkylbenzolsulfonate, worin die Alkylreste insgesamt 4 bis 18 Kohlenstoffatome enthalten, und oligomere Kondensationsprodukte aus Formaldehyd und Naphthalinsulfonsäuren.

Auf den genannten Oxydschichten auf Aluminium oder Aluminiumlegierungen sind mit den Farbstoffen der Formel (I), insbesondere den bevorzugten, grüne bis schwarze bzw. graue Färbungen erhältlich, die sich durch ihre hohen Echtheiten, vor allem Lichtechtheiten, auszeichnen (auch Naßlichtechtheit und Witterungsechtheit), besonders diejenigen, die insgesamt drei Sulfogruppen enthalten, vor allem diejenigen, worin B den Rest einer Kupplungskomponente der Formel (β) bedeutet.

Die Farbstoffe der Formel (I), worin -B den Rest einer Kupplungskomponente der Formel (α), (β), (γ), (δ) oder (η) worin T₁ -NH₂ bedeutet, eignen sich zur Erzeugung grüner Färbungen, während diejenigen, worin -B den Rest einer Kupplungskomponente der Formel (ε), (ζ) oder (η) worin T₁ -OH bedeutet, sich zur Erzeugung dunkelgrüner bis schwarzer bzw. grauer Färbungen eignen und diejenigen, worin -B den Rest einer Kupplungskomponente HB₄ bedeutet, sich zur Erzeugung violetter bis schwarzer Färbungen eignen.

Zur Farbgebung an Kunststoffmassen können im allgemeinen wasserlösliche Kunststoffe bzw. Polymere verwendet werden, wie sie in entsprechenden farbigen Präparaten, wie z.B. in Waschmitteln oder in Kosmetika, sonst üblicherweise eingesetzt werden. Vornehmlich können genannt werden: Polymere und Copolymere aus äthylenisch ungesättigten C₃₋₈-Monocarbonsäuren und gegebenenfalls C₄₋₈-Dicarbonsäuren, Polyalkylenglykole (vornehmlich Polyäthylenglykole) oder Polyätherurethane. Die durchschnittlichen Molekulargewichte M_{W} dieser Polymeren können in weiten Bereichen schwanken, für Polycarbonsäuren z.B. von 5000 bis bis 5000000, vorteilhaft 50000 bis 200000, für Polyalkylenglykole, insbesondere Polyäthylenglykole, z.B. von 400 bis 6000, vorzugsweise 600 bis 4000, für Polyätherurethane z.B. von 10000 bis 10⁸, besonders 10⁵ bis 10⁷.

Besonders erwähnenswert sind solche Polymeren und Copolymeren, die in Waschmitteln eingesetzt werden, vornehmlich Polycarbonsäuren, insbesondere (Co)polymere aus (Meth)acrylsäure und gegebenenfalls Maleinsäure. Das Molverhältnis der ungesättigten Monocarbonsäuren zu den ungesättigten Dicarbonsäuren liegt dabei vorteilhaft im Bereich von 5/5 bis 9/1, vorzugsweise 6/4 bis 8/2. Die ungesättigte Dicarbonsäure wird dabei vorteilhaft als Anhydrid eingesetzt. Die Polycarbonsäuren werden vorteilhaft in Form ihrer Alkalimetallsalze eingesetzt, z.B. als Lithium-, Natrium- oder Kaliumsalze, worunter Natriumsalze bevorzugt sind.

Diese Polymeren sind, insbesondere in der Form ihrer Alkalimetallsalze, wasserlöslich (d.h. sie bilden, mindestens unter Applikationsbedingungen, echte oder kolloidale Lösungen in Wasser).

Zur Herstellung von entsprechenden farbstoffhaltigen Polymermassen werden die Polymeren vorteilhaft in Form von konzentrierten, wäßrigen Lösungen, z.B. bei Konzentrationen im Bereich von 5 bis 80, vorzugsweise 15 bis 50 Gew.-% mit einer entsprechenden Farbstofflösung, z.B. einer Konzentration im Bereich von 10 bis 90, vorzugsweise 20 bis 80 Gew.-%, gemischt und gegebenenfalls mit weiteren Zusätzen vermischt, die für die jeweilige Verwendung geeignet ist und im jeweiligen Gebiet der Technik üblich ist. Die so hergestellten Gemische können entweder direkt verwendet werden oder, gewünschtenfalls, getrocknet bzw. granuliert werden, z.B. zu Pulver oder Granulat.

Ein besonderer Gegenstand der Erfindung ist die Verwendung der Farbstoffe der Formel (I), besonders der grünen, in Waschmitteln, z.B. als rieselfähiges, farbiges Granulat (z.B. in Polymeren wie oben erwähnt), das als farbige Sprenkel mit nicht-farbstoffhaltigem Waschmittelgranulat vermischt wird oder zusammen mit den gesamten Waschmittelkomponenten vermischt entweder in einem flüssigen Waschmittel vorliegt oder in einem Waschmittelgranulat.

Eine geeignete Zusammensetzung eines als Waschmittelzusatz geeigneten, farbigen Polymergranulates, das als Polymer eine Polycarbonsäure enthält, ist eine solche, die vorteilhaft 10 bis 70, vorzugsweise 20 bis 40 Gew.-% Polycarbonsäure, als Natriumsalz, und den Rest auf 100 Gew.-% (minus x Gew.-% für den Farbstoff) Verschnittsalz, vorzugsweise Glaubersalz, enthält und eine solche Menge x Gew.-% Farbstoff enthält, die ausreicht um dem Sprenkel eine deutliche Farbe vorzugsweise in einem Grünton zu verleihen, vornehmlich im Bereich von 0,005 bis 0,2 Gew.-%, vorzugsweise 0,01 bis 0,1 Gew.-% Farbstoff.

In den Waschmitteln sind die Farbstoffe in minimalen Anteilen enthalten. Das Gewichtsverhältnis von farbigem Sprenkel zu restlichem Waschmittel liegt beispielsweise im Bereich von 0,01/99,99 bis 2/98, vorzugsweise im Bereich von 0,05/99,95 bis 1/99. Die erfindungsgemäß einzusetzenden Farbstoffe haben auch keine negative Wirkung auf allfällige optische Aufheller, die im Waschmittel vorhanden sein könnten, sondern sind mit anionischen Waschmittelaufhellern gut verträglich. Bei der Verwendung der Waschmittel zum Reinigen von Textilgut unter den allgemeinen alkalischen Bedingungen, die durch die Waschmittelzusammensetzung gegeben sind, zieht der Farbstoff praktisch nicht oder nur labil auf das Substrat auf, so daß es im selben Waschgang oder in einem Folgewasch- oder -spülgang ausgewaschen werden kann.

Ein weiterer besonderer Gegenstand der Erfindung ist durch die wasserlöslichen Polymermassen dargestellt, die durch einen Gehalt an Farbstoff der Formel (I) gekennzeichnet sind, insbesondere die rieselfähigen Granulate.

Die bevorzugten Farbstoffe der Formel (I), die auch Gegenstand der Erfindung sind, besonders diejenigen, die auch nur zwei Sulfogruppen enthalten, können auch in Strahldrucktinten ("jet inks") oder zum Färben von fasrigen Substraten eingesetzt werden, z.B. von Wolle oder Leder, nach an sich üblichen Färbeverfahren.

Die Farbstoffe der Formel (I) zeichnen sich durch eine sehr hohe Lichtechtheit der damit erzeugten Färbungen und auch der damit kolorierten bzw. angefärbten Massen aus.

In den folgenden Beispielen bedeuten Teile Gewichtsteile und die Prozente Gewichtsprozente; die Temperaturen sind in Celsiusgraden angegeben. Die λₘₐₓ -Werte (Lichtabsorptionsmaxima) sind in wäßriger, verdünnter NaOH-Lösung für das Absorptionsmaximum im gelben Bereich (λ_{max.1}) und im blauen Bereich (λ_{max.2}) gemessen.

### Beispiel 1

a) Herstellung von 1-Amino-4-(4'-aminophenylamino)-anthrachinon-2,2',5'-trisulfonsäure In 530 Teile Schwefelsäure und 280 Teile 25 %-iges Oleum trägt man 122,25 Teile 1-Amino-4--(4'-aminophenylamino)-anthrachinon-2,3'-disulfonsäure in kleinen Portionen ein, wobei die Temperatur auf 60°C ansteigt. Man heizt bei 80°C unter Rühren während 5 Stunden. Danach gibt man das entstandene Gemisch in eine Mischung aus 1000 Teilen Wasser, 1000 Teilen Eis und 600 Teilen Natriumchlorid. Das ausgefallene Produkt wird abfiltriert und getrocknet. Man erhält die Titelverbindung entsprechend der Formel 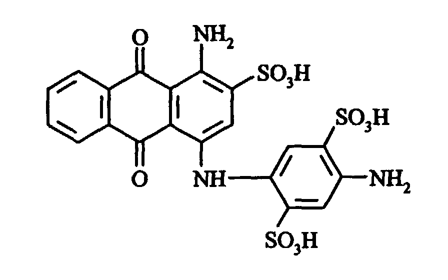 in guter Ausbeute.
b) Zu 28,45 Teilen der unter a) hergestellten Trisulfonsäure in 400 Teilen Wasser, 200 Teilen Eis und 1 Teil Salzsäure tropft man 3,45 Teile Natriumnitrit in 8 Teilen Wasser. Man läßt 30 Minuten bei 0°C nachrühren und zerstört dann den Überschuß an Nitrit mit wenig Sulfaminsäure. Anschließend tropft man eine Lösung von 8,85 Teilen Acetessigsäureanilid in 60 Teilen Wasser mit 5 Teilen 30 %-iger Natriumhydroxidlösung zu. Die Temperatur steigt auf ca. 10°C an. Man gibt noch 25 Teile Natriumchlorid dazu und filtriert. Der als Natriumsalz erhaltene Farbstoff entspricht in Form der freien Säure der Formel 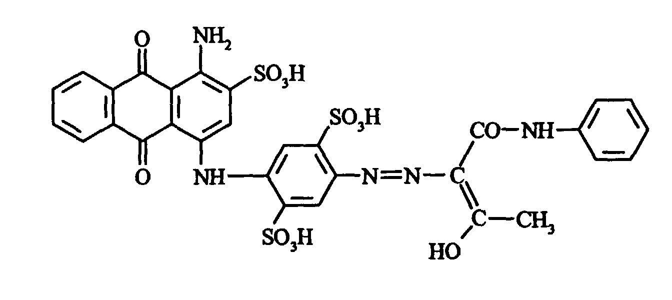 mit λₘₐₓ₁ = 427 nm und λₘₐₓ₂ = 640 nm,
   als Natriumsalz. Er färbt anodisiertes Aluminium in grünen Tönen. Diese Aluminiumfärbungen zeigen eine hohe Lichtechtheit.

### Beispiel 2

Zu 28,45 Teilen 1-Amino-4-(4'-aminophenylamino)-anthrachinon-2,6,3'-trisulfonsäure in 400 Teilen Wasser, 200 Teilen Eis und 1 Teil Salzsäure tropft man 3,45 Teile Natriumnitrit in 8 Teilen Wasser. Man läßt 30 Minuten bei 0°C nachrühren und zerstört dann den Überschuß an Nitrit mit wenig Sulfaminsäure. Anschließend tropft man eine Lösung von 8,85 Teilen Acetessigsäureanilid in 60 Teilen Wasser mit 5 Teilen 30 %-iger Natriumhydroxidlösung zu. Die Temperatur steigt auf ca. 10°C an. Man gibt noch 25 Teile Natriumchlorid dazu und filtriert. Der als Natriumsalz erhaltene Farbstoff entspricht in Form der freien Säure der Formel 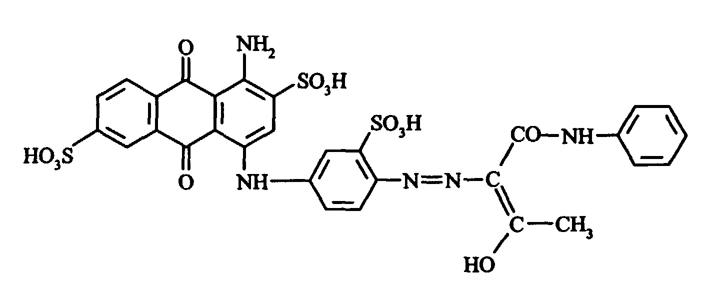 mit λₘₐₓ₁ = 427 nm und λₘₐₓ₂ = 640 nm.

Er färbt anodisiertes Aluminium in grünen Tönen. Die Aluminiumfärbungen zeigen eine hohe Lichtechtheit.

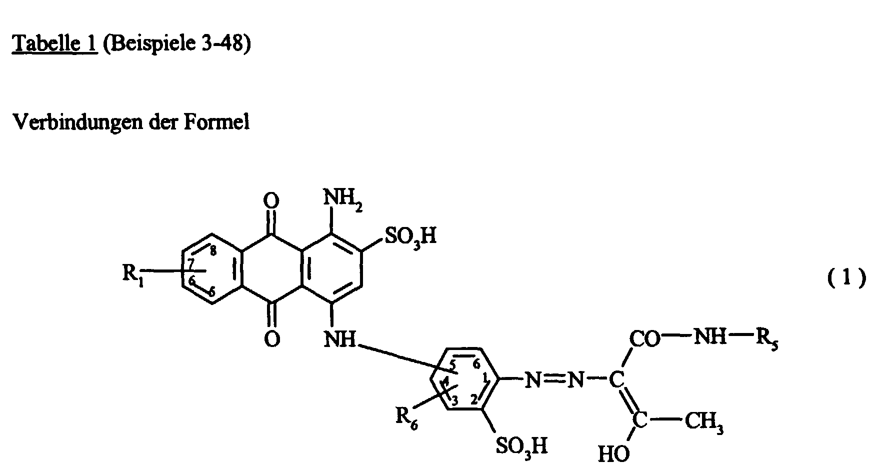

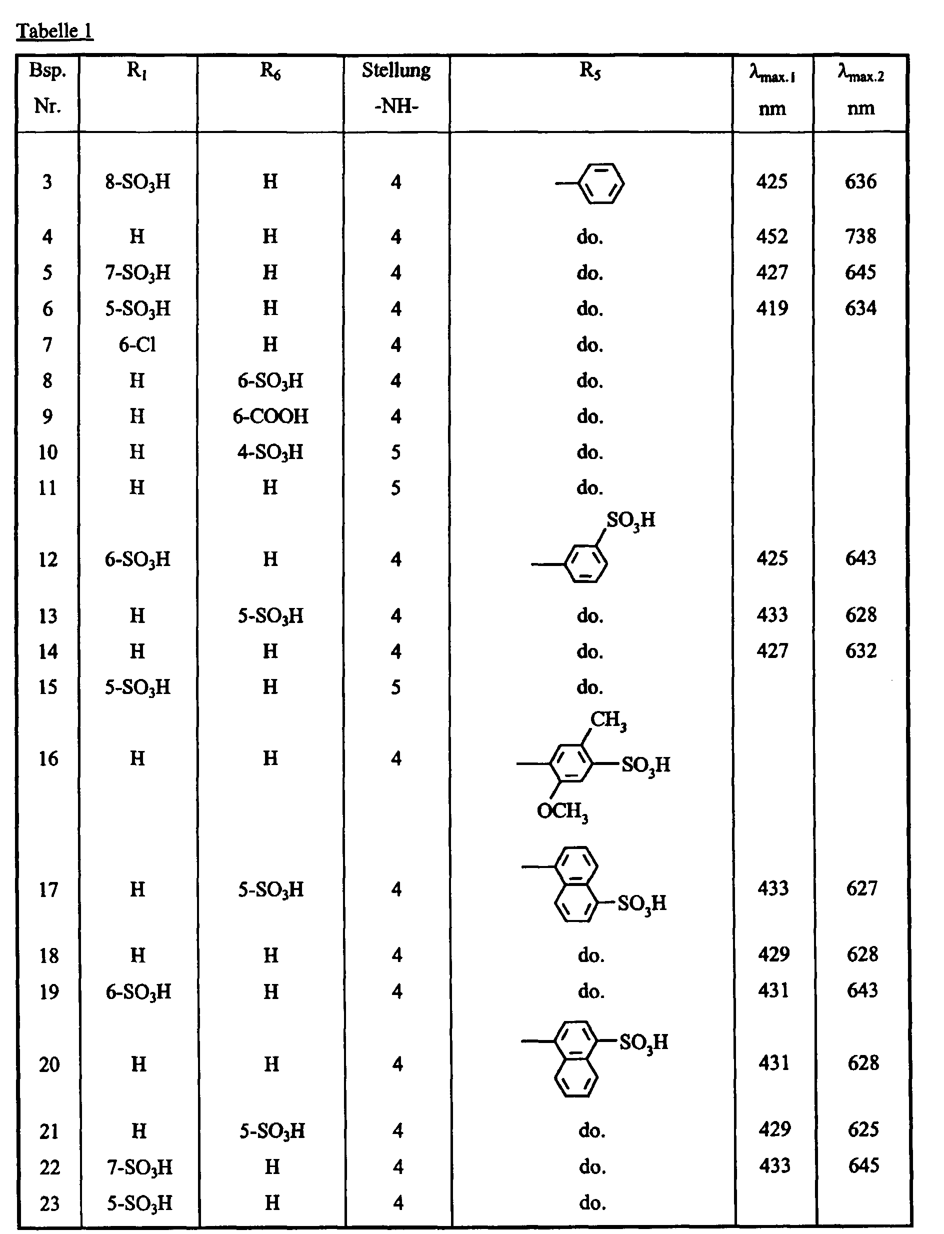

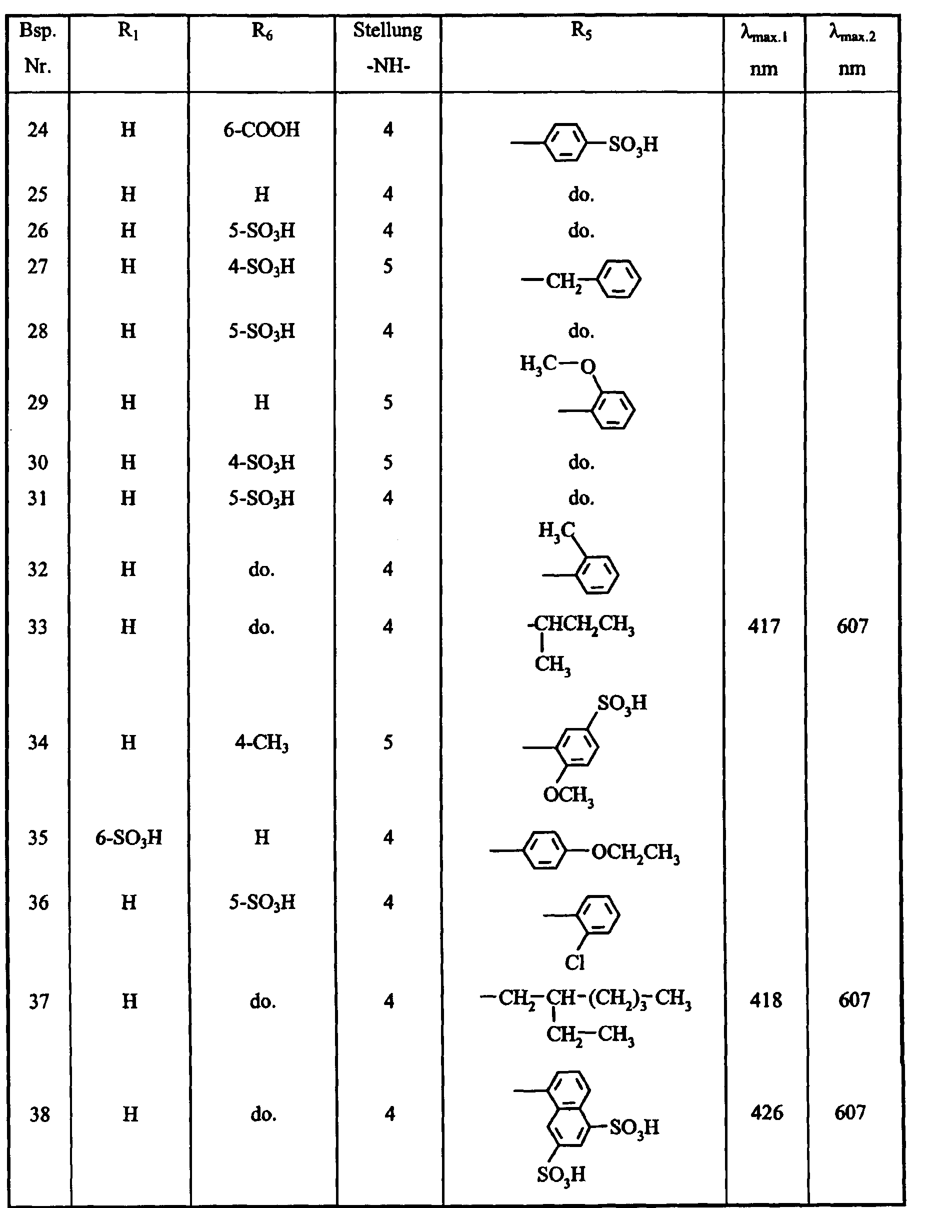

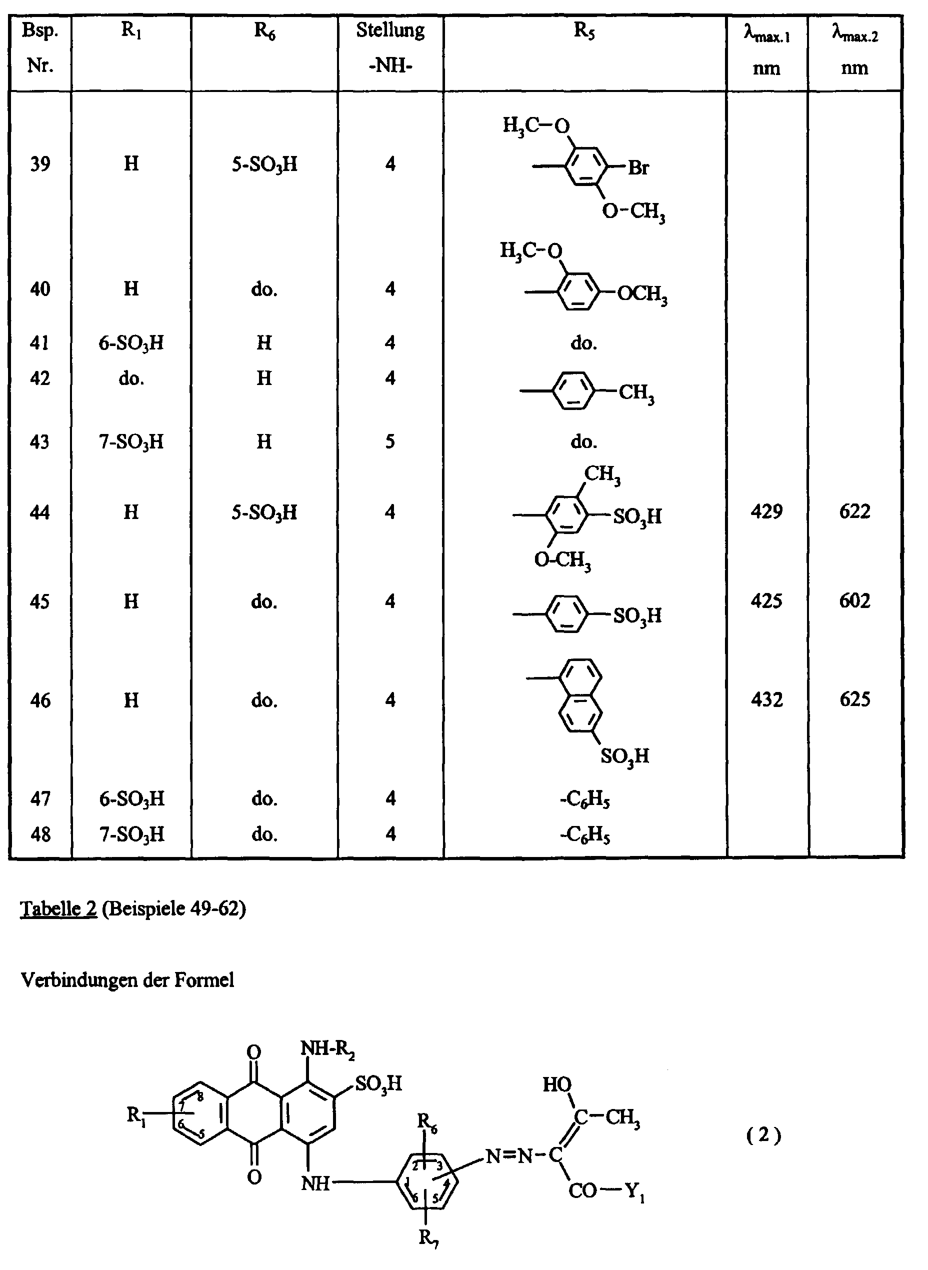

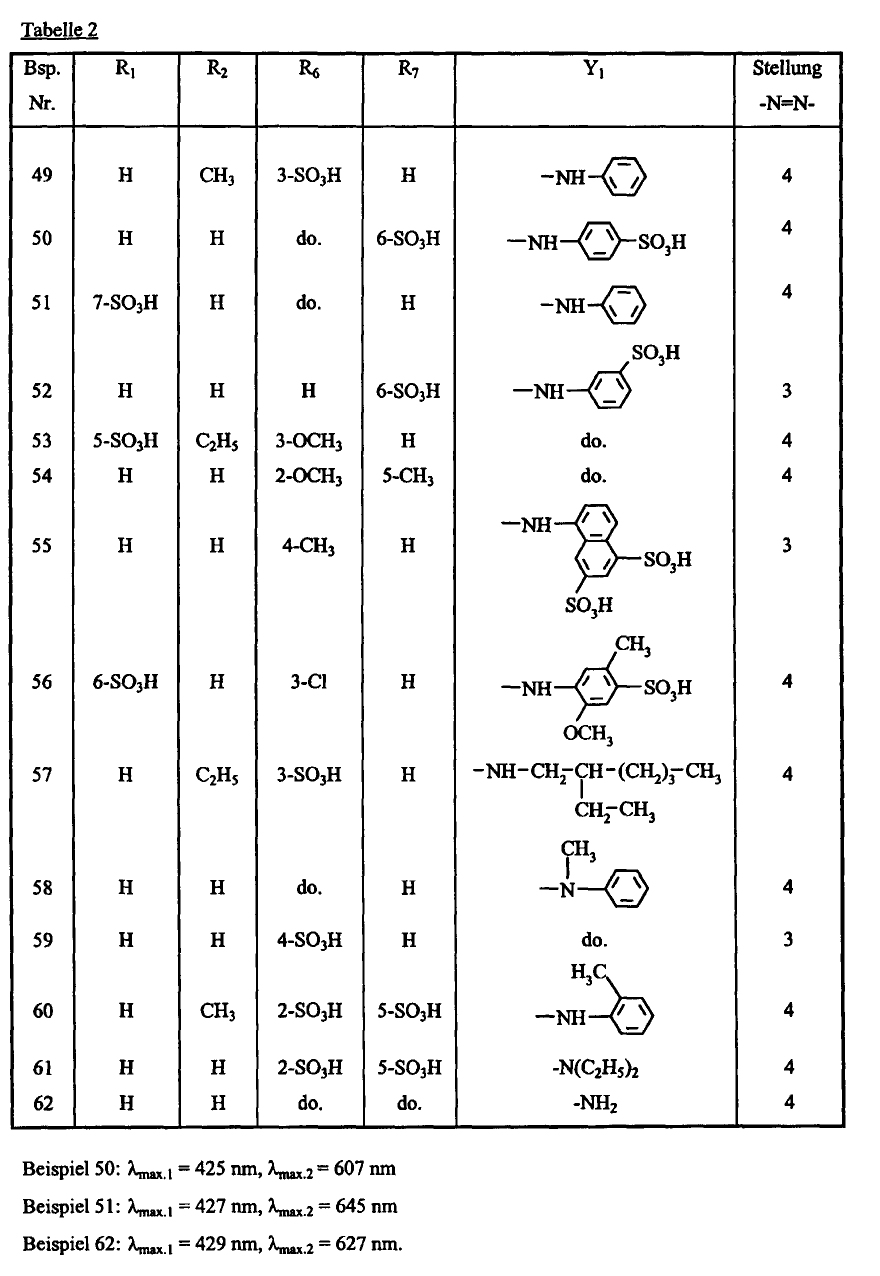

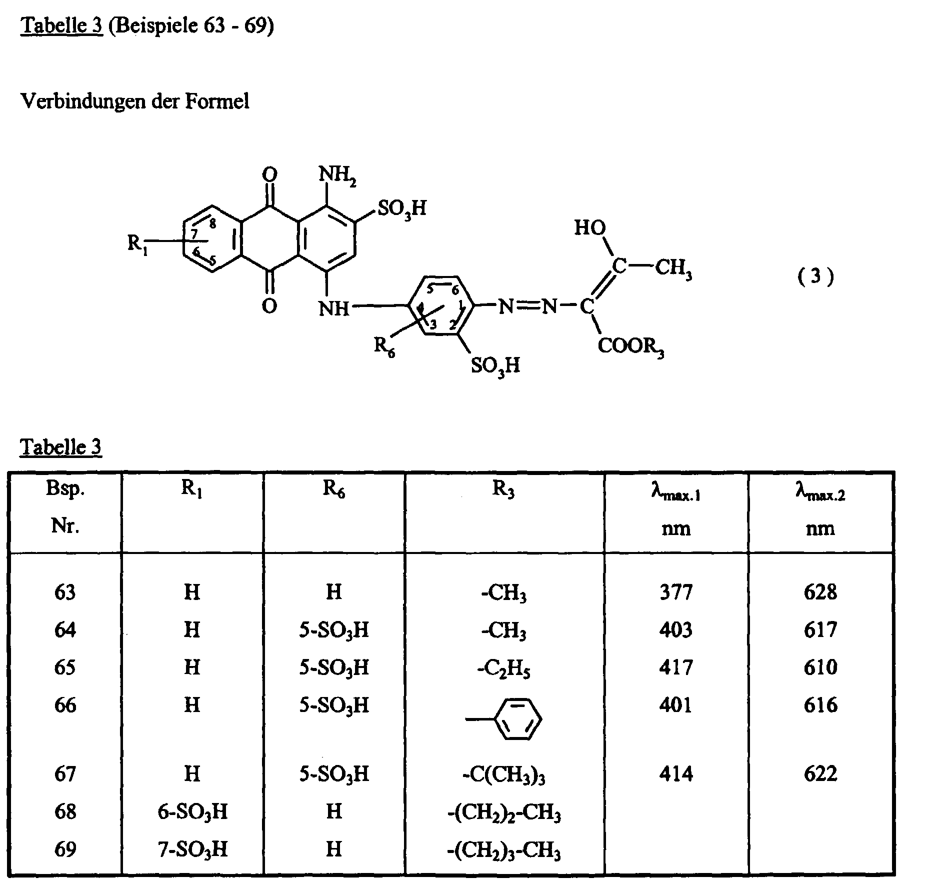

Die Verbindungen der folgenden Tabellen 4 - 7 (Beispiele 70 - 99) und der Beispiele 100 bis 102 werden in Analogie zu den Angaben der Beispiele 1, 2, bzw. 78 hergestellt.

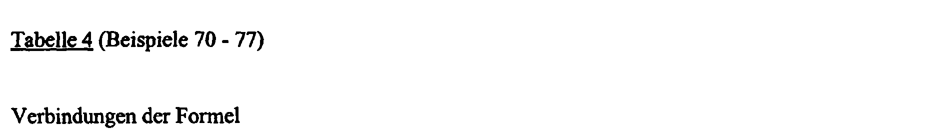

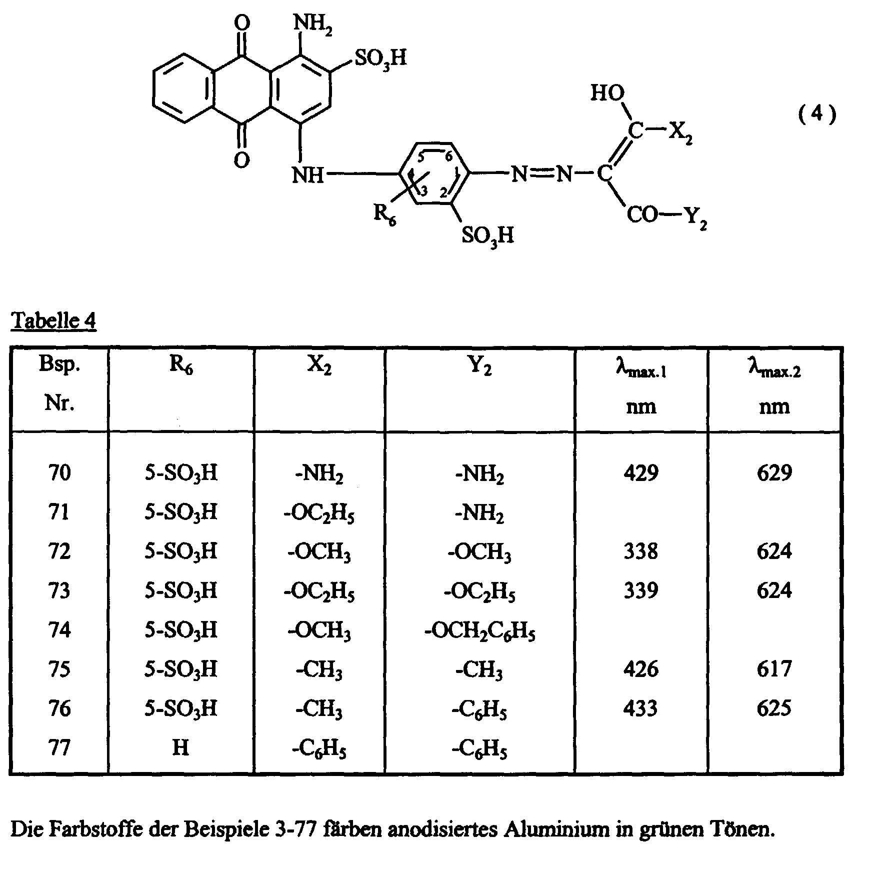

### Beispiel 78

Zu 9,8 Teilen 1-Amino-4-(4'-aminophenyl)-anthrachinon-2,3'-disulfonsäure in 200 Teilen Wasser, 100 Teilen Eis und 1 Teil Salzsäure, tropft man 1,5 Teile Natriumnitrit in 8 Teilen Wasser. Man rührt bei 0°C 30 Minuten nach, zerstört den Nitritüberschuss mit wenig Sulfaminsäure, tropft sodann eine Lösung von 4,66 Teilen 1-Äthyl-4-methyl-6-hydroxypyridon-3-sulfonsäure in 20 Teilen Wasser mit 2 Teilen NaOH-Lösung 30 %, zu. Der pH-Wert wird dabei zwischen 8,5 und 9,5 gehalten. Durch Zugabe von Natriumchlorid fällt man den Farbstoff aus, filtriert ihn ab und wäscht ihn. Auf anodisiertem Aluminium erhält man mit diesem Farbstoff, der in Form der freien Säure der Formel 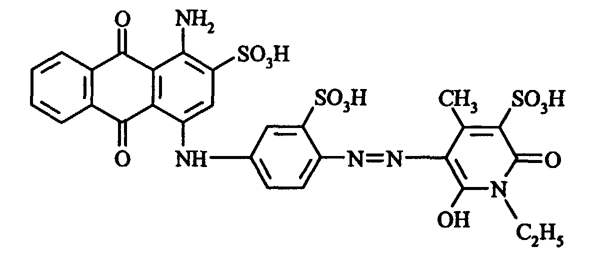 λₘₐₓ₁ = 455 nm, λₘₐₓ₂ = 622 nm
entspricht schwarze Färbungen.

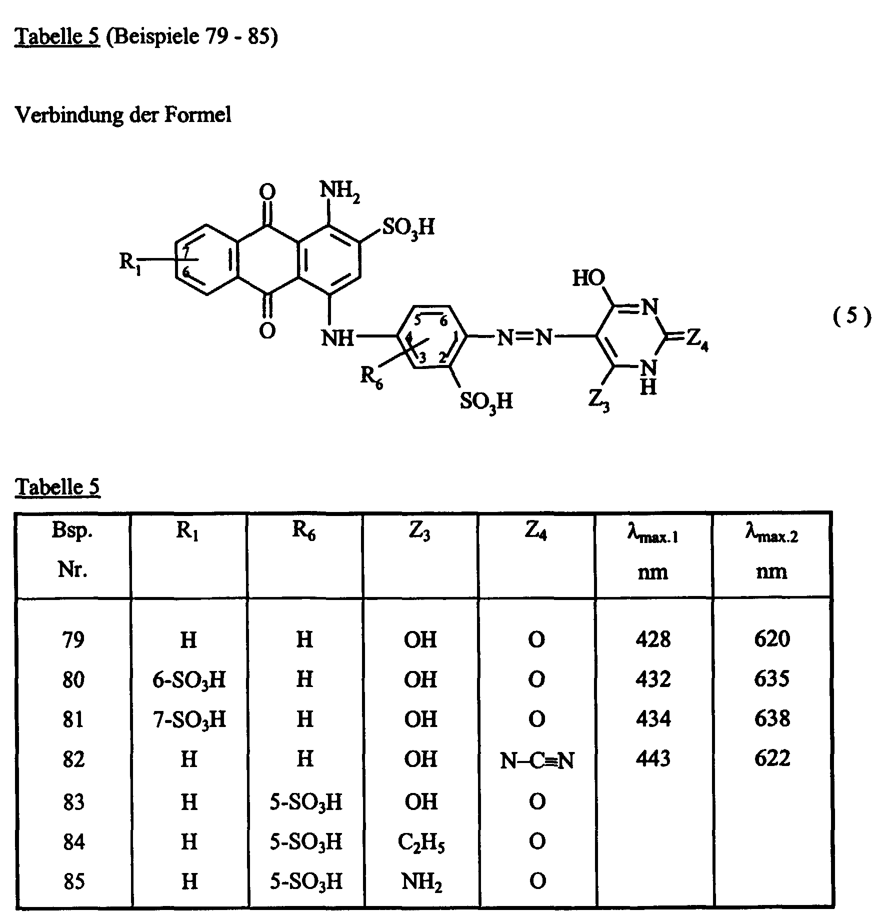

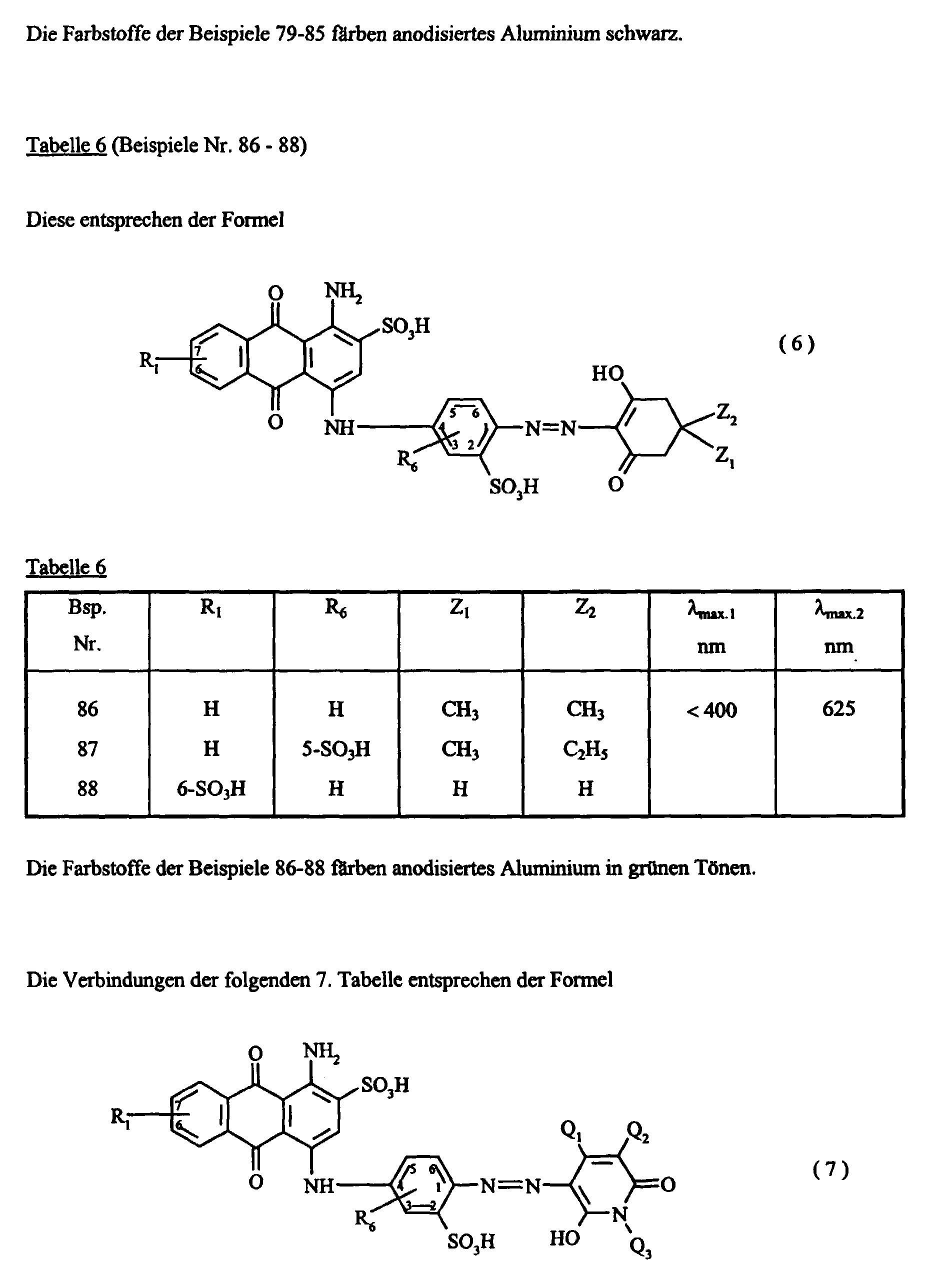

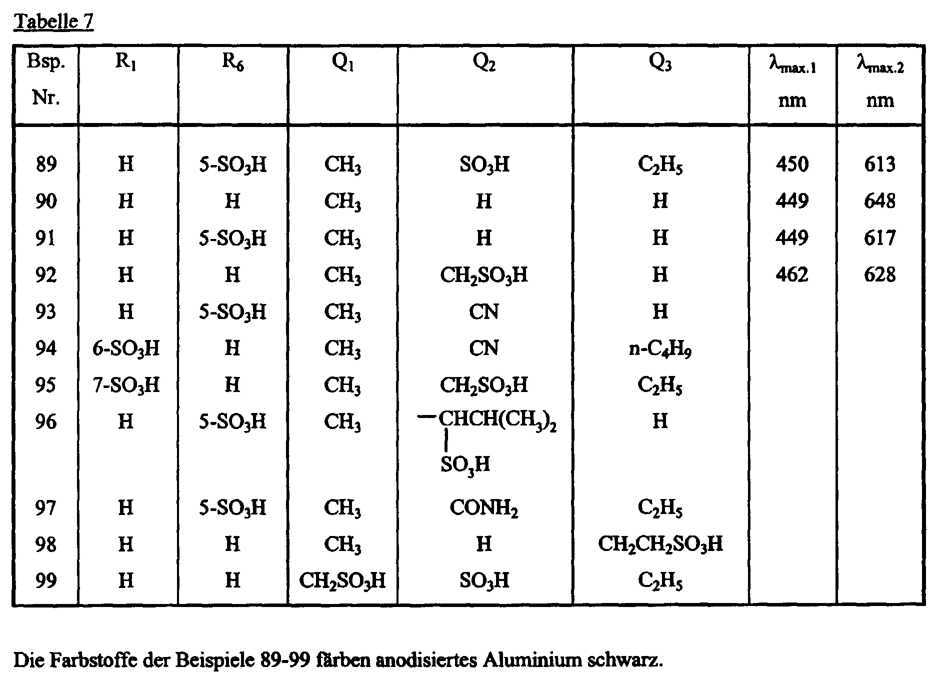

### Beispiel 100

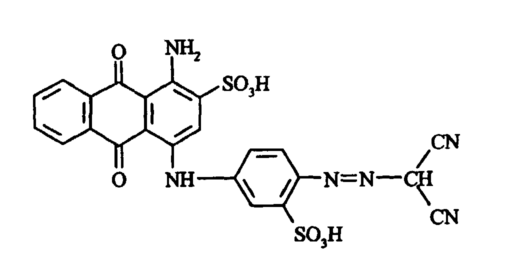

λₘₐₓ₁ = 414 nm; λₘₐₓ₂ = 630 nm.

### Beispiel 101

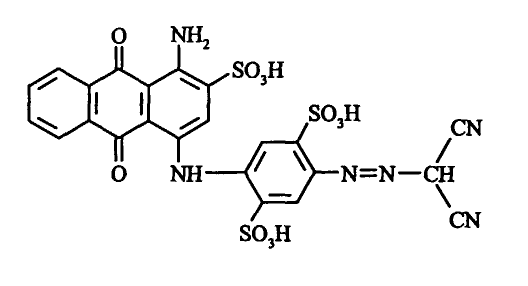

λₘₐₓ₁ = 423 nm; λₘₐₓ₂ = 625 nm.

### Beispiel 102

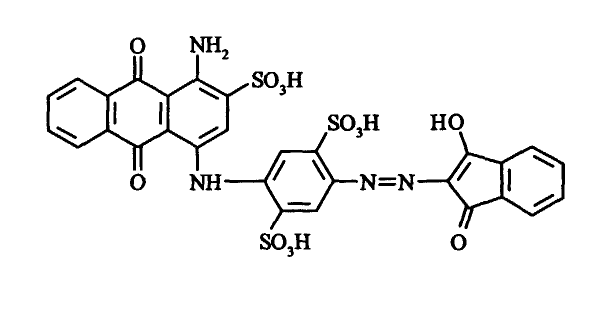

λₘₐₓ₂ = 616 nm.

Die Farbstoffe der Beispiele 100 bis 102 färben anodisiertes Aluminium in grünen Tönen.

Die Farbstoffe der folgenden Tabelle 8 entsprechen der Formel

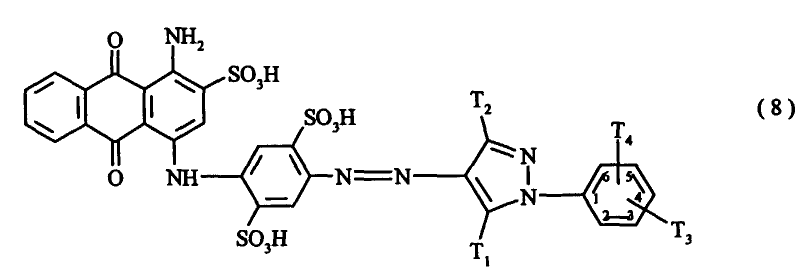

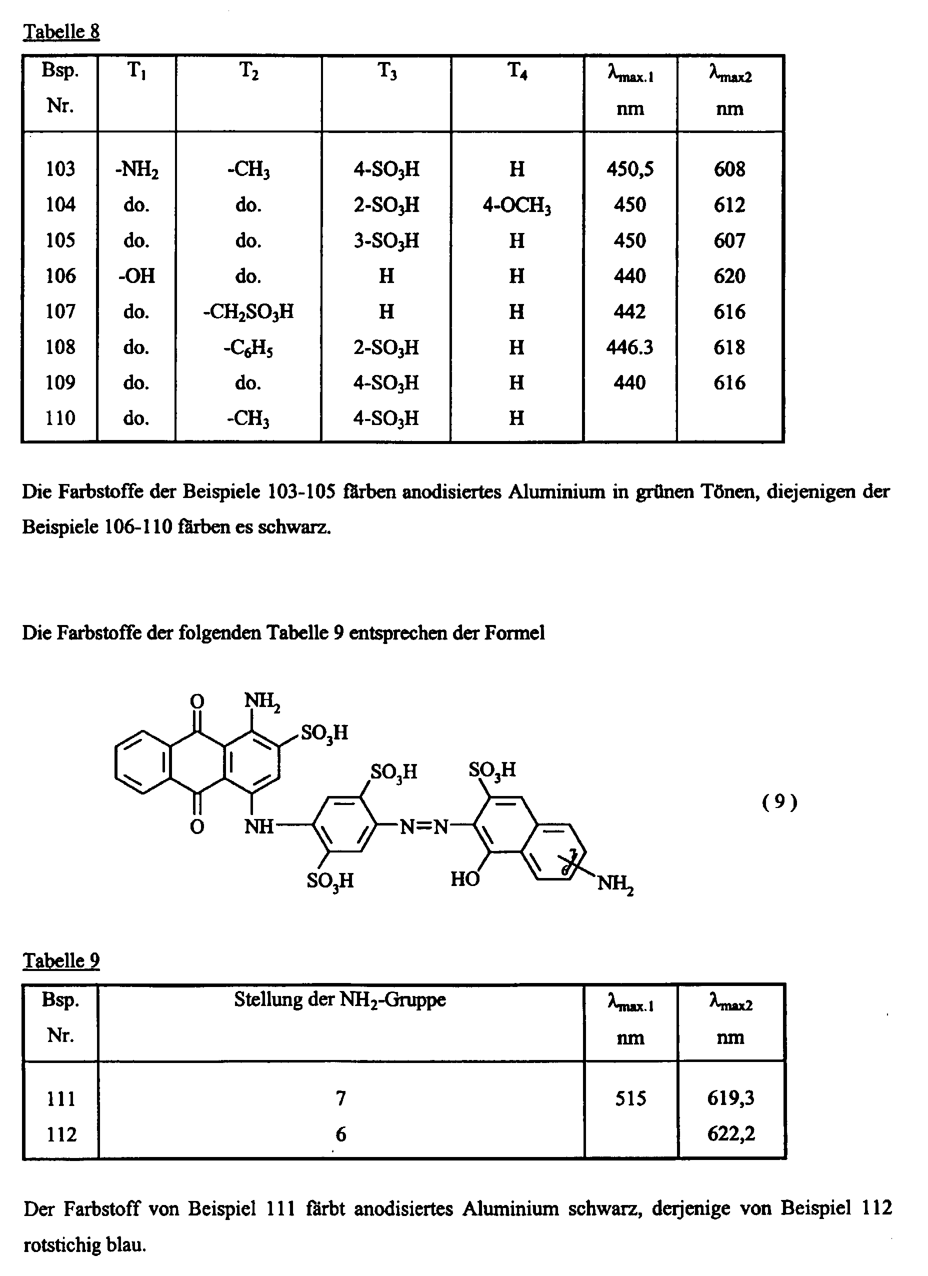

### Applikationsbeispiel A

Ein entfettetes und desoxidiertes Werkstück aus Reinaluminium wird in einer wäßrigen Lösung, die auf 100 Teile 18-22 Teile Schwefelsäure und 1,2-7,5 Teile Aluminiumsulfat enthält, bei einer Temperatur von 18-20°C, einer Spannung von 15-16 Volt und einer Stromdichte von 1,5 A/dm² während 40-50 Minuten mit Gleichstrom modisch oxidiert. Dabei wird eine Oxidschicht von ca. 20-24 µm Dicke gebildet. Nach dem Spülen in Wasser färbt man das anodisierte Aluminiumblech 15 Minuten lang bei 60°C in einer Lösung, bestehend aus 0,5 Teilen des Farbstoffes gemäß Beispiel 1 in 1000 Teilen entionisiertem Wasser, dessen pH mit Essigsäure und Natriumacetat auf 5,5 eingestellt wurde. Das gefärbte Aluminiumblech wird nach dem Spülen in Wasser bei 98-100°C während 40-50 Minuten in entionisiertem Wasser versiegelt. Man erhält eine rein grüne Färbung von guter Hitzebeständigkeit und sehr guter Lichtechtheit.

### Applikationsbeispiel B

Es wird so verfahren, wie im Applikationsbeispiel A beschrieben, mit dem Unterschied, daß die Nachbehandlung unter sonst gleichen Bedingungen in einer Lösung von 3 Teilen Nickelacetat in 1000 Teilen Wasser vorgenommen wird. Man erhält eine rein grüne Färbung von guter Hitzebeständigkeit und sehr guter Lichtechtheit.

### Applikationsbeispiel C

10 Teile des Farbstoffes aus Beispiel 1 werden in 500 Teilen Wasser gelöst und in eine hochviskose Lösung, bestehend aus 400 Teilen Wasser und 100 Teilen Methylcellosolve mit einem mittleren Polymerisationsgrad und einem Substitutionsgrad von 1,5 eingerührt. Die so erhaltene Druckfarbe wird nach dem Siebdruckverfahren auf ein trockenes, oxidiertes Aluminiumblech aufgetragen, das durch Anodisieren einer Aluminiumlegierung vom Typ Al/Mg/Si 0,5 während 30 Minuten in einer Lösung von 100 Teilen Chromsäureanhydrid in 1000 Teilen Wasser bei 53°C und einer Stromdichte von 1,2 A/dm² erhalten wurde. Das bedruckte Blech wird während 10 Minuten in siedendes Wasser eingetaucht und in kaltem Wasser gut gespült. Man erhält ein grünes Muster auf einem schwach gräulichen Grund.

Analog wie der Farbstoff von Beispiel 1 werden die Farbstoffe der Beispiele 2-112 in den Applikationsbeispielen A, B und C eingesetzt, wobei man jeweils grüne oder schwarze Färbungen erhält.

### Applikationsbeispiel D

100 Teile einer 40 %-igen Lösung eines Copolymeren aus Acrylsäure und Maleinsäure im Molverhältnis 7/3, mit einem durchschnittlichen Molekulargewicht M_{w} = 70000, als Natriumsalz, werden mit 120 Teilen Glaubersalz und mit 0,03 Teilen des gemäß Beispiel 45 hergestellten Farbstoffes gemischt und die entstandene Masse wird in einem Extrusionskompaktator/Granulator extrudiert und granuliert (Körnung im Bereich von 0,3 bis 2 mm). Das entstandene Granulat ist grün und kann als grünfarbener Sprenkel für Waschmittelgranulate verwendet werden. Dafür eignet sich z.B. ein Waschmittel der Zusammensetzung gemäß EMPA Artikel Nr. 602 (phosphatfreies Waschmittel, IEC Referenzwaschmittel Typ A). Es werden 99,5 Teile Waschmittel der gleichen Körnung mit 0,5 Teilen der grünfarbenen Sprenkel gemischt.

Auf analoge Weise werden, anstelle des Farbstoffes von Beispiel 45 die Farbstoffe der Beispiele 13, 44, 103, 104 oder 105 eingesetzt.

## Patentansprüche

1. Verwendung von wasserlöslichen Farbstoffen der Formel 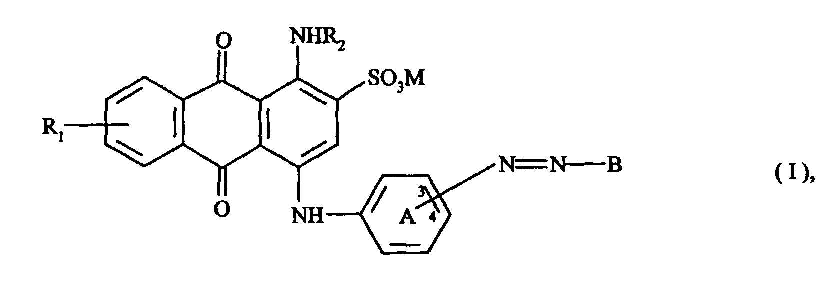 worin
R₁ Wasserstoff, Hydroxy, C₁₋₄-Alkyl, C₁₋₄-Alkoxy, Halogen oder SO₃M,
R₂ Wasserstoff, C₁₋₄-Alkyl oder C₃₋₆-Cycloalkyl,
B den Rest einer carbocyclischen, heterocyclischen oder methylenaktiven nichtcyclischen Kupplungskomponente mit höchstens zwei gegebenenfalls kondensierten carbocyclischen Ringen,
und
M Wasserstoff oder ein nicht-chromophores Kation
bedeuten, der Ring A weiter unsubstituiert ist oder mit einem bis vier Substituenten der Reihe: C₁₋₄-Alkyl, C₁₋₄-Alkoxy, Halogen, -NO₂, -COOM und -SO₃M substituiert ist, und die Gruppe -N=N-B an die Stellung 3 oder 4 des Ringes A gebunden ist,
mit der Maßgabe, daß das Molekül mindestens zwei Gruppen -SO₃M enthält,
zum Färben oder Kolorieren von nicht-faserigen Substraten.

2. Verwendung nach Anspruch 1, dadurch gekennzeichnet, daß B der Rest einer Kupplungskomponente HB₁, HB₂, HB₃ oder HB₄ ist, worin
HB₁ eine methylenaktive, nicht-cyclische Kupplunskomponente ist, in welcher gegebenenfalls vorhandene carbocyclische Ringe unsubstituiert sind oder mit einem oder mehreren der Substituenten C₁₋₄-Alkyl, C₁₋₄-Alkoxy, Halogen und -SO₃M substituiert sind;
HB₂ eine methylenaktive, carbocyclische nicht-aromatische Kupplunskomponente ist;
HB₃ eine heterocyclische Kupplunskomponente ist, in welcher gegebenenfalls vorhandene carbocyclische Ringe unsubstituiert sind oder mit einem oder mehreren der Substituenten C₁₋₄-Alkyl, C₁₋₄-Alkoxy, Halogen und -SO₃M substituiert sind;
und
HB₄ eine Kupplungskomponente der Formel 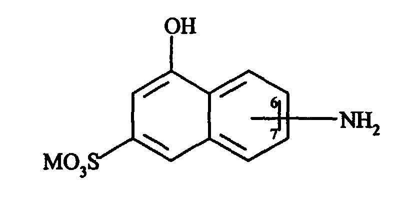
ist, worin die Aminogruppe an die Stellung 6 oder 7 der Naphthalinrestes gebunden ist.

3. Verwendung nach Anspruch 1 oder 2 zum Färben oder Kolorieren von anodisiertem Aluminium, oder Kunststoffbeschichtungen oder -massen.

4. Verwendung nach Anspruch 3 zur Herstellung farbiger Kunststoffmassen, worin der Kunststoff ein wasserlösliches Polymeres ist.

5. Verwendung nach Anspruch 4 zum Kolorieren von Rieselgut.

6. Verwendung nach Anspruch 5 von grünen Farbstoffen der Formel (I) mit mindestens drei Sulfogruppen zur Herstellung farbiger Sprenkel für Waschmittelgranulate.

7. Die Monoazofarbstoffe der Formel (I), definiert wie im Anspruch 2.

8. Verfahren zur Herstellung von Verbindungen der Formel (I) definiert wie im Anspruch 1 oder 7, dadurch gekennzeichnet, daß man die Diazoverbindung aus mindestens einem Amin der Formel 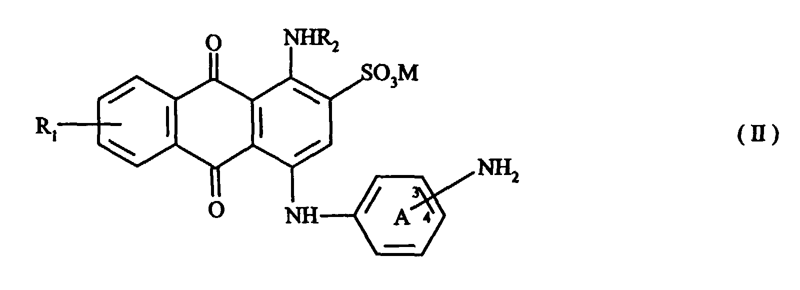 mit mindestens einer Kupplungskomponente der Formel 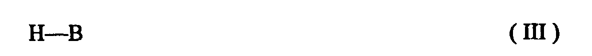 kuppelt oder eine Verbindung der Formel 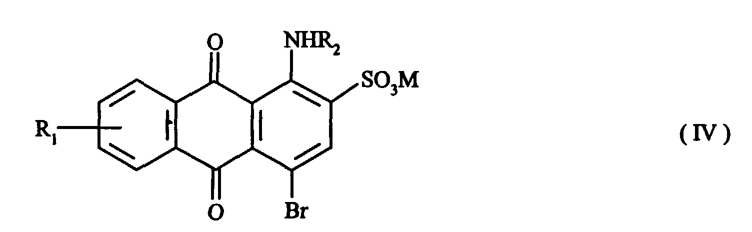 mit einer Verbindung der Formel 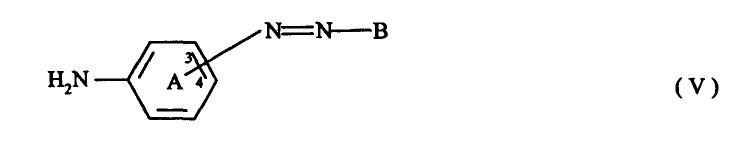 umsetzt.

9. Farbige Kunststoffmassen, worin der Kunststoff ein wasserlösliches Polymeres ist, das mit mindestens einem Farbstoff der Formel (I), definiert wie im Anspruch 1 oder gemäß Anspruch 7, koloriert ist.

10. Verwendung der Farbstoffe gemäß Anspruch 7 zum Färben von faserigen Substraten und/oder in Strahldrucktinten.
